# EUROPÄISCHE PATENTSCHRIFT

(11) **EP 0 453 752 B1**
(45) Veröffentlichungstag und Bekanntmachung des Hinweises auf die Patenterteilung: **24.11.1993**
(21) Anmeldenummer: 91103985.7
(22) Anmeldetag: 15.03.1991
(51) Int. Cl.: B60G 17/033, B60G 17/052

(54) **Omnibus, insbesondere Niederflurbus**
Omnibus especially with low platform
Autobus, en particulier à plate-forme surbaissée

(30) Priorität: 27.04.1990 DE 4013673
(43) Veröffentlichungstag der Anmeldung: 30.10.1991
(73) Patentinhaber: MAN Nutzfahrzeuge Aktiengesellschaft, 80976 München (DE)
(72) Erfinder: Holzmann, Stefan, Dipl.-Ing., W-8049 Grossnöbach (DE)

(56) Entgegenhaltungen:
- DE-U- 8 330 949
- FR-A- 1 494 046
- US-A- 3 572 747
- PATENT ABSTRACTS OF JAPAN Band 9, Nr. 98 (M-375)(1821), 27. April 1985 & JP - A - 59223508 (HINO JIDOSHA) 15.12.1984

## Beschreibung

Die Erfindung betrifft einen Omnibus, insbesondere Niederflurbus, mit Merkmalen entsprechend dem Oberbegriff des Anspruchs 1.

Ein Omnibus mit einer ein solches _{"}kneeling" ermöglichenden Einrichtung ist aus JP-A 59223508 bekannt. Dabei kommt ein achsweise geschlossenes Druckluftsystem zur Anwendung, mit einem durch eine Membran zweigeteilten Steuerbehälter, an dessen einem Raum eine einstiegsseitige Luftfeder und dessen anderen Raum die achsseitig gegenüberliegende Luftfeder angeschlossen ist. Zur Steuerung des _{"}kneeling" ist in den Steuerbehälter eine druckluftbetätigte Zylinder-/Kolben-Einheit eingebaut, deren Kolben an der Membran angeschlossen ist und so, je nach Betätigungsrichtung derselben, Luft zur einen Luftfeder hinpumpt, gleichzeitig entsprechend viel Luftablaß aus der anderen Luftfeder zuläßt. Diese Lösung hat jedoch abgesehen von den hohen Kosten für den Steuerbehälter den Nachteil, daß seitens der Zylinder-/Kolben-Einheit ein relativ hohes Stützmoment aufgebracht werden muß, um während der Fahrt Nickbewegungen des Wagenaufbaus um dessen Längsachse infolge der an den Steuerbehälter angeschlossenen Luftfedern zu vermeiden. Dies kann entweder durch entsprechend starke Bemessung der in der Zylinder-/Kolben-Einheit gegebenen Rückstelldruckfeder oder durch ein entsprechend hohes, im Druckraum der Zylinder-/Kolben-Einheit verbleibendes Druckhalteniveau erzeugt werden, setzt dann aber relativ hohe Steuerdrücke voraus.

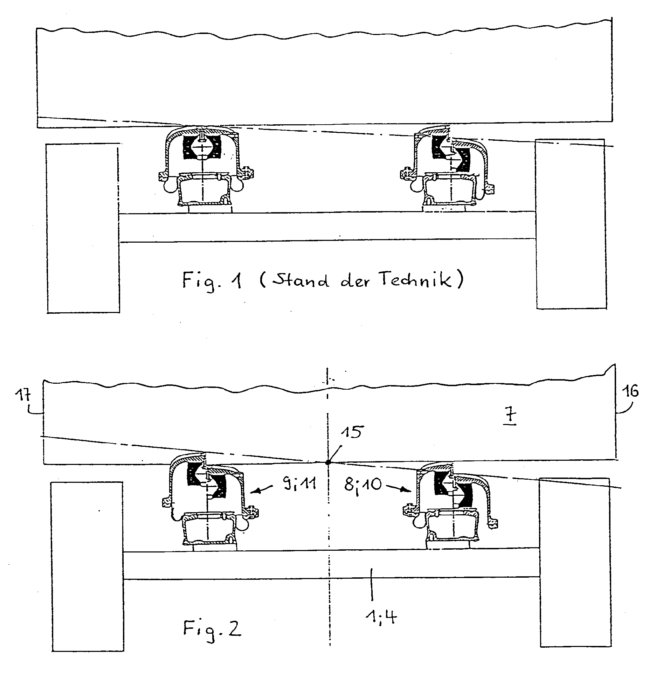

Demgegenüber wird bei anderen bekannten, gebauten Niederflurbussen der Anmelderin und anderer Bushersteller ein anderes Druckluftsystem verwendet, um den Wagenaufbau während einer Bus-Haltephase auf seiner die Fahrgasteinstiegtüren aufweisenden Seite abzusenken. Dabei wird Luft aus den diesseitigen Luftfedern in die Atmosphäre abgelassen, der Wagenaufbau bleibt auf der gegenüberliegenden Seite auf den dortigen Luftfedern abgestützt. Dieser Vorgang ist in Fig. 1 der Zeichnung als Stand der Technik dargestellt.

Diese bekannte Absenkmöglichkeit erweist sich für den angestrebten Zweck als durchaus brauchbar. Nachteilig ist jedoch die vergleichsweise lange Dauer des Absenkvorganges, weil die Druckluft aus den Luftfedern nur über geringe Leitungsquerschnitte, die von Niveauregelventilen oder Magnetventilen freigegeben werden, abgelassen werden kann. Bei Linienbussen mit knapp bemessenen fahrplanmäßigen Haltezeiten kann dies zu unerwünschten Verspätungen führen.

Es ist daher Aufgabe der Erfindung, bei einem Omnibus Mittel vorzusehen, mit denen das Absenken und Wiederanheben des Wagenaufbaues rasch und mit vergleichsweise geringem Energieaufwand durchführbar ist.

Diese Aufgabe ist erfindungsgemäß durch einen Omnibus mit den im Anspruch 1 angegebenen Merkmalen gelöst.

Dadurch, daß bei der erfindungsgemäßen Lösung zwischen den einzelnen Luftfedern je Achse ein geschlossenes Druckluftsystem gegeben ist, aus dem im Gegensatz zum Stand der Technik für das einseitige Absenken des Wagenaufbaus keine Druckluft in die Atmosphäre abgelassen, sondern zwischen den links- und rechtsseitigen Luftfedern je Achse nur umgepumpt wird, ist das erfindungsgemäße Ziel auf vorteilhafte Weise realisierbar. Es ist für das Umpumpen nur eine vergleichsweise geringe Zusatzenergie notwendig, die jedenfalls wesentlich geringer ist als jene, die für das herkömmliche Rückbefüllen der entladenen Luftfedern durch den Betrieb des Kompressors notwenig ist.

Außerdem läßt das erfindungsgemäße Prinzip eine Reihe von Möglichkeiten zu, mit der das Umpumpen der Luft durchführbar ist, so daß von Fall zu Fall die geeignetste Variante wählbar ist. Solche Möglichkeiten sind in den Unteransprüchen angegeben.

Nachstehend ist die Erfindung anhand der Zeichnung noch näher erläutert. In der Zeichnung zeigen:
- Fig. 1: schematisiert die bisherige Lösung (Stand der Technik),
- Fig. 2: schematisiert das allgemeine Erfindungsprinzip,
- Fig. 3 bis 5: je eine Ausführungsform der Erfindung schematisiert,
- Fig. 6 und 7: schematisiert jeweils eine Ausführungsmöglichkeit eines Details der Variante gemäß Fig. 5.

In der Zeichnung sind der Übersichtlichkeit wegen gleiche bzw. einander entsprechende Teile mit gleichen Bezugszeichen angezogen.

Vom Omnibus, insbesondere Niederfluromnibus, sind in der Zeichnung - soweit für das Verständnis der Erfindung notwendig - die Vorderachse 1 mit Rädern 2, 3, die Hinterachse 4 mit Rädern 5, 6, der Wagenaufbau 7, welcher über Luftfedern 8, 9, 10, 11 auf den Achsen 1, 4 bzw. den Radaufhängungen abgestützt ist, und das zur Versorgung der Luftfedern mit Druckluft erforderliche System in Verbindung mit der erfindungsgemäßen Einrichtung dargestellt.

Die im Omnibus erforderliche Druckluft wird von einem Kompressor 12 erzeugt und über ein Druckregelventil 13 einem Druckluftvorratsbehälter 14 zugeführt. Aus diesem ist die Druckluft allen zu versorgenden Verbrauchern des Omnibus, wie Bremsen, Türöffnungs- und Schließmechanismen und dergleichen mehr (nicht dargestellt) sowie den Luftfedern 8, 9, 10, 11 zuführbar.

Die erfindungsgemäße Einrichtung ist hinsichtlich ihrer Teile und ihrer Funktion derart ausgebildet, daß - wie aus Fig. 2 ersichtlich - der Wagenaufbau 7 über ein achsweise geschlossenes Druckluftsystem
a) während einer Bus-Haltephase an einer Haltestelle etwa um seine bodenseitige Längsmittelachse 15 dem Waagebalken-Prinzip entsprechend verschwenkbar ist, das heißt an der die Fahrgasteinstiegtüren aufweisenden Seite 16 auf eine gegenüber Normalniveau niedrigere Einstiegshöhe absenkbar und gleichzeitig auf der gegenüberliegenden Seite 17 anhebbar ist durch Umpumpen der in den einstiegseitigen Luftfedern 8, 10 gegebenen Druckluft in die achsseitig jeweils gegenüberliegenden Luftfedern 9, 11, und
b) nach Beendigung der Bus-Haltephase durch Rückleiten der Druckluft aus den Luftfedern 9, 11 zu den einstiegseitigen Luftfedern 8, 10 wieder in Normallage rückführbar ist.

Das Absenken des Wagenaufbaus 7 gemäß a) ist erst möglich, wenn einer elektronischen Regel- und Steuereinrichtung 18 von einem Geber 19 das Betätigen der Haltestellenbremse und von einem Grenzwertgeber 20 das Unterschreiten einer Minimalgeschwindigkeit von beispielsweise 3 km/h signalisiert wird. Das Wiederanheben des Wagenaufbaus 7 gemäß b) ist ebenfalls erst möglich, wenn von einem Geber 21 das Schließen der Einstiegtüren der Regel- und Steuereinrichtung 18 signalisiert wird. Auf diese Weise sind fahrgastsichere Verhältnisse gewährleistet.

Der Vorteil des erfindungsgemäßen Prinzips beruht darauf, daß die Druckluft nicht wie beim Stand der Technik gemäß Fig. 1 aus den Luftfedern verlustgehend in die Atmosphäre abgelassen, sondern in einem geschlossenen Druckluftsystem nur zwischen den jeweiligen Luftfedern 8 und 9 bzw. 10 und 11 einer Achse 1 bzw. 4 hin- und hergeschoben wird.

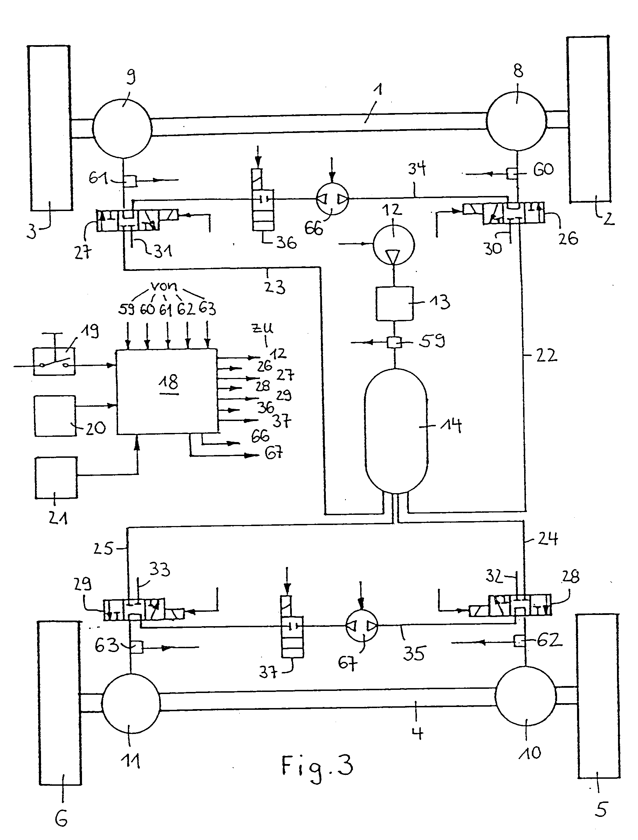

Für die Bewerkstelligung dieser Vorgänge gibt es eine Reihe von Möglichkeiten, von denen einige anhand der Fig. 3 bis 7 nachfolgend erläutert sind. Allen Varianten ist dabei eines gemeinsam, daß je Luftfeder 8, 9, 10, 11 ein elektrisch, vorzugsweise durch von der Regel- und Steuereinrichtung 18 ausgegebene Schaltbefehle gesteuertes Niveauregelventil 26 bzw. 27 bzw. 28 bzw. 29 vorgesehen ist, das in die jeweilige, vom Druckluftvorratsbehälter 14 zu einer der Luftfedern 8, 9, 10, 11 führenden Druckluftversorgungsleitung 22 bzw. 23 bzw. 24 bzw. 25 eingeschaltet ist. Jedes der Niveauregelventile kann drei Schaltstellungen einnehmen, nämlich eine erste, in der die Luftfedern 8, 9, 10, 11 zur Einnivellierung des Wagenaufbaus 7 auf das gewünschte Höhenniveau gegenüber der Fahrbahn mit Druckluft aus dem Druckluftvorratsbehälter 14 befüllbar sind, eine zweite, in der die Luftfedern 8, 9, 10, 11 zur Einnivellierung des Wagenaufbaus 7 auf ein gegenüber vorherigem niedrigeres Höhenniveau in Bezug auf die Fahrbahn durch Ablassen von Druckluft in die Atmosphäre entlastbar sind, und eine dritte, in der die Druckluftversorgungsleitungen 22, 23, 24, 25 sowie die Entlastungsausgänge 30, 31, 32, 33 jeweils abgesperrt, aber je eine Umpumpleitung 34 bzw. 35 zwischen den Luftfedern 8, 9 einerseits und 10, 11 andererseits auf Durchlaß geschaltet sind.

Bei der Variante gemäß Fig. 3 wird das Umpumpen der Druckluft zwischen den Luftfedern 8 und 9 bzw. 10 und 11 zum Verschwenken des Wagenaufbaus 7 durch ein von der Regel- und Steuereinrichtung 18 initiiertes Umschalten jeweils eines sich normalerweise in Sperrposition befindlichen, in der Umpumpleitung 34 bzw. 35 gegebenen Absperrventils 36 bzw. 37 in Durchlaßstellung und Inbetriebsetzung einer Pumpe 66 bzw. 67 in der notwendigen Förderrichtung bewerkstelligt. Das Rückschwenken des Wagenaufbaus 7 aus Verschwenkstellung in Normallage kann jedoch auch ohne Zuhilfenahme der Pumpen 66, 67 durch Druckausgleich zwischen den Luftfedern 9, 8 bzw. 11, 10 erfolgen.

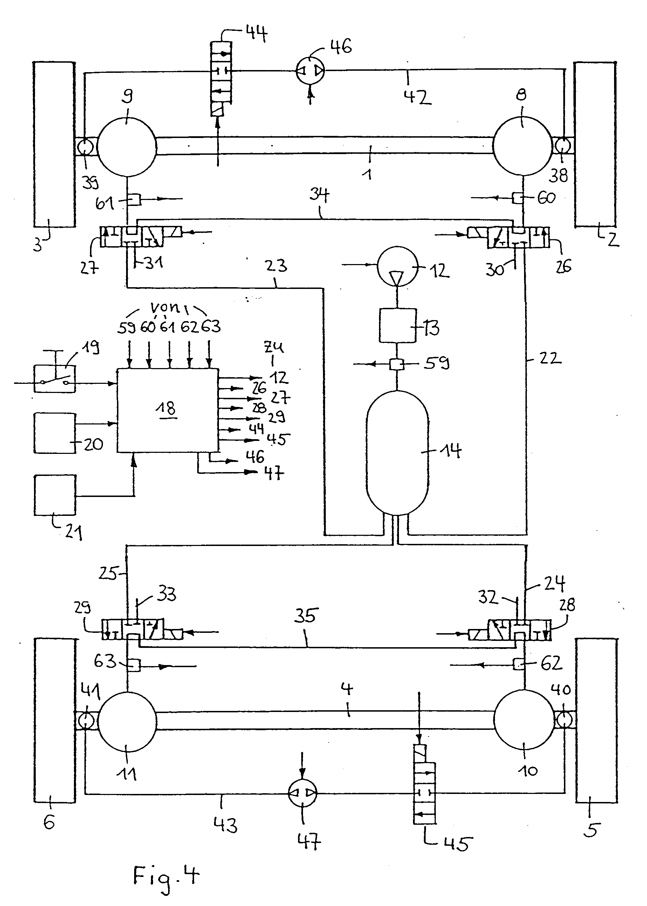

Bei der Variante gemäß Fig. 4 wird das Umpumpen der Druckluft zwischen den Luftfedern 8 und 9 bzw. 10 und 11 zum Verschwenken des Wagenaufbau 7 durch eine elektrohydraulische Einrichtung, mit der die wirksame Länge der den Luftfedern 8, 9, 10, 11 im Omnibus fahrwerksseitig beigeordneten Stoßdämpfer 38, 39, 40, 41 entsprechend veränderbar ist, in Verbindung mit den auf Durchlaß geschalteten Umpumpleitungen 34, 35 bewerkstelligt, wobei besagte elektrohydraulische Einrichtung je eine Verbindungsleitung 42 bzw. 43 zwischen den Druckräumen der Stoßdämpfer 38 und 39 bzw. 40 und 41 sowie in jeder dieser Verbindungsleitungen 42, 43 je ein Richtungsumschalt-/Absperrventil 44 bzw. 45 und je eine elektromotorisch betriebene reversible Pumpe 46 bzw. 47 aufweist und zum Umpumpen auf Initiativen der Regel- und Steuereinrichtung 18 hin die Richtungsumschalt-/Absperrventile 44, 45 in entsprechende Durchlaßstellung sowie die Pumpen 46, 47 in entsprechender Förderrichtung betrieben werden. Dabei wird Drucköl aus den Druckräumen der Stoßdämpfer 38, 40 abgesaugt und den Druckräumen der achsseitig gegenüber liegenden Stoßdämpfer 39, 41 zugeführt, mit der Folge, daß der Wagenaufbau 7 auf der Einstiegtüren - Seite 16 nach unten gezogen, auf der gegenüberliegenden Seite 17 angehoben, dabei gleichzeitig die Druckluft aus den einstiegseitigen Luftfedern 8, 10 herausgedrückt und über die Umpumpleitungen 34, 35 in die achsseitig gegenüber liegenden Luftfedern 9, 11 eingespeist wird. Zum Rückschwenken des Wagenaufbaus 7 in Normallage laufen vorstehend beschriebene Vorgänge aufgrund nun in entgegengesetzter Förderrichtung betriebener Pumpen 46, 47 in umgekehrter Richtung ab.

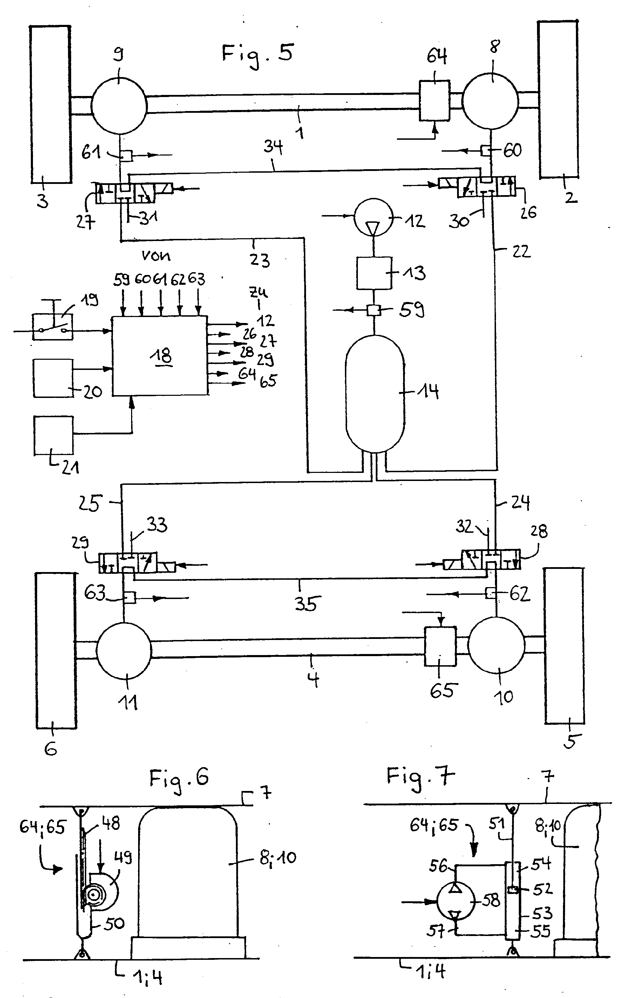

Bei der Variante gemäß Fig. 5 bis 7 wird das Umpumpen der Druckluft zwischen den Luftfedern 8 und 9 bzw. 10 und 11 zum Verschwenken des Wagenaufbaus 7 durch einen elektromechanischen (Fig. 6) oder elektrohydraulischen (Fig. 7) Liftmechanismus 64 bzw. 65, mit dem der Abstand zwischen Wagenaufbau 7 und den Achsen 1, 4 im Bereich der betreffenden Luftfedern 8, 9, 10, 11 veränderbar ist, in Verbindung mit den auf Durchlaß geschalteten Umpumpleitungen 34, 35 bewerkstelligt. Der wenigstens eine, je Achse 1, 4 benachbart einer Luftfeder 8, 10, gegebenenfalls auch 9, 11 angeordnete elektromechanische Liftmechanismus 64 bzw. 65 kann - wie aus Fig. 6 ersichtlich - aus einer an der jeweiligen Achse 1 bzw. 4 oder dem Wagenaufbau 7 angelenkten Zahnstange 48 und einem auf letztere einwirkenden elektrischen Getriebemotor 49 bestehen, welch letzterer mit einem die Federbewegungen des Wagenaufbaus 7 während der Fahrt zulassenden Freilauf ausgestattet ist und an einem gleichzeitig auch die Zahnstange 48 führenden sowie am Wagenaufbau 7 bzw. der Achse 1 bzw. 4, dem Anlenkpunkt der Zahnstange 48 entgegensetzt angelenkten Tragorgan 50 befestigt ist. Zum Verschwenken des Wagenaufbaus 7 wird von der Regel- und Steuereinrichtung 18 ein Schaltbefehl an den Getriebemotor 49 gegeben, worauf dieser, in entsprechender Drehrichtung laufend, über die Zahnstange 48 den Wagenaufbau 7 im einen Fall auf der Einstiegstüren-Seite 16 zur Achse 1 bzw. 4 herunterzieht, wodurch die Druckluft aus den einstiegsseitigen Luftfedern 8, 10 herausgedrückt und über die niveauregelventilseitig durchgeschalteten Umpumpleitungen 34, 35 in die achsseitig gegenüberliegenden Luftfedern 9, 11 eingespeist und dadurch das Verschwenken des Wagenaufbaus 7 unterstützt wird. Zum Rückschwenken des Wagenaufbaus 7 wird der Getriebemotor 49 in seine Ausgangslage zurückgebracht.

Anstelle des vorbeschriebenen elektromechanischen Liftmechanismus 64, 65 kann dieser auch durch elektrohydraulische Teile - wie in Fig. 7 dargestellt - realisiert sein. In diesem Fall besteht er jeweils aus einer einenendes am Wagenaufbau 7, anderenendes an der Achse 1 bzw. 4 angelenkten Kolben-/Zylinder-Einheit, deren an einer Kolbenstange 51 angeschlossener Kolben 52 im Zylinder 53 zwei Druckräume 54, 55 voneinander trennt, sowie einer elektromotorisch betriebenen, mit ihren Anschlüssen 56, 57 mit je einem der beiden Druckräume 54, 55 verbundenen reversiblen Pumpe 58. Zum Verschwenken des Wagenaufbaus 7 gibt die Regel- und Steuereinrichtung 18 einen Schaltbefehl an die Pumpe 58 ab, worauf diese, in entsprechender Drehrichtung laufend, Hydrauliköl aus dem einen Druckraum 54 bzw. 55 absaugt und in den anderen Druckraum 55 bzw. 54 einpumpt, wodurch der Kolben 52 entsprechend bewegt wird. Zum einstiegseitigen Absenken des Wagenaufbaus 7 wird der Kolben 52 nach unten gedrückt, wodurch der Wagenaufbau 7 zur Achse 1 bzw. 4 heruntergezogen, dadurch Druckluft aus den einstiegsseitigen Luftfedern 8, 10 herausgedrückt und über die niveauregelventilseitig durchgeschalteten Umpumpleitungen 34, 35 in die achsseitig gegenüberliegenden Luftfedern 9, 11 eingespeist, somit das Verschwenken des Wagenaufbaus 7 unterstützt wird. Zum Rückschwenken des Wagenaufbaus 7 in seine Normallage werden die Pumpen 58 jedes Liftmechanismus 64, 65 in entgegengesetzter Förderrichtung betrieben, so daß vorstehend beschriebene Vorgänge in umgekehrter Richtung ablaufen.

Unabhängig von der jeweiligen Ausführungsvariante sind im Druckluftsystem eine Reihe von Druckmeßsensoren 59 (erfaßt Druck im Druckluftvorratsbehälter 14), 60 (erfaßt Druck in Luftfeder 8), 61 (erfaßt Druck in Luftfeder 9), 62 (erfaßt Druck in Luftfeder 10) und 63 (erfaßt Druck in Luftfeder 11) vorgesehen, die die erfaßten Druckmeßwerte als Istwerte an die Regel- und Steuereinrichtung 18 melden. Von letzterer werden diese Druck-Istwerte mit vorgegebenen, zum Beispiel abgespeicherten Sollwerten verglichen und hieraus die nötigen Maßnahmen, z.B. mittels eines Mikroprozessors, errechnet sowie erforderliche Schalt- bzw. Stellbefehle an die über zugehörige Steuerleitungen angeschlossenen Organe 12, 26, 27, 28, 29, 36, 37, 66, 67 (Fig. 3) bzw. 12, 26, 27, 28, 29, 44, 45, 46, 47 (Fig. 4) bzw. 12, 26, 27, 28, 29, 64 (dort 49 oder 58), 65 (dort 49 oder 58) (Fig. 5 bis 7) ausgegeben. Anhand der sensormäßig erfaßten Druckwerte der Luftfedern 8, 9, 10, 11 bestimmt sich somit das Maß der Höhenniveau-Einstellung bzw. der Verschwenklage des Wagenaufbaus 7 relativ zur Fahrbahn bzw. zu den Achsen 1 bzw. 4.

## Patentansprüche

1. Omnibus, insbesondere Niederflurbus, mit über Luftfedern (8, 9, 10, 11) auf den Achsen (1, 4) bzw. Radaufhängungen abgestütztem Wagenaufbau (7) und mit einer hinsichtlich ihre Teile und Funktion derart ausgebildeten Kneeling-Einrichtung, daß der Wagenaufbau (7) über ein achsweise geschlossenes Druckluftsystem
- während einer Bus-Haltephase etwa um seine bodenseitige Längsmittelachse (15) verschwenkbar, das heißt, an der die Fahrgasteinstiegtüren aufweisenden Seite (16) auf eine gegenüber Normalniveau niedrigere Einstieghöhe absenkbar und gleichzeitig auf der gegenüberliegenden Seite (17) anhebbar ist durch über Hilfsmittel gesteuertes Ableiten von Druckluft aus den einstiegsseitigen Luftfedern (8, 10) und gleichzeitiges Zuführen von Druckluft in die achsseitig jeweils gegenüberliegenden Luftfedern (9, 11), und
- nach Beendigung der Bus-Haltephase durch Rückleiten von Druckluft in die einstiegsseitigen Luftfedern (8, 10) und gleichzeitiges Ableiten von Druckluft aus den gegenüberliegenden Luftfedern (9, 11) wieder in Normallage rückverschwenkbar ist,
dadurch gekennzeichnet, daß die Kneeling-Einrichtung spezielle Hilfsmittel aufweist, mit denen für ein einstiegsseitiges Absenken des Wagenaufbaus (7) während der Bus-Haltephase ein Umpumpen von Druckluft aus den einstiegsseitigen Luftfedern (8, 10) in die achsweise gegenüberliegenden Luftfedern (9, 11) und nach Beendigung der Bus-Haltephase für ein Rückschwenken des Wagenaufbaus (7) in Normallage ein Rückleiten von Druckluft aus den Luftfedern (9, 11) in die einstiegsseitigen Luftfedern (8, 10) steuerbar ist.

2. Omnibus nach Anspruch 1, dadurch gekennzeichnete daß als Hilfsmittel für die Wagenaufbau-Verschwenkung je Luftfeder (8, 9, 10, 11) ein elektrisch gesteuertes, in die zugehörige, am Druckluftvorratsbehälter (14) angeschlossene Druckluftversorgungsleitung (22, 23, 24, 25) eingeschaltetes Niveauregelventil (26, 27, 28, 29) und zwischen den Niveauregelventilen (26, 27) einerseits und (28,29) andererseits je eine das Umpumpen bzw. Rückleiten der Druckluft zwischen den links- und rechtsseitigen Luftfedern (8, 10 bzw. 9, 11) je Achse (1, 4) ermöglichende sowie mittels eines Schaltventiles (36 bzw. 37) durchschalt- bzw. absperrbare Umpumpleitung (34 bzw. 35) mit elektromotorisch betriebener reversibler Pumpe (66 bzw. 67) vorgesehen ist.

3. Omnibus nach Anspruch 1, dadurch gekennzeichnet, daß als Hilfsmittel für die Wagenaufbau-Verschwenkung je Luftfeder (8, 9, 10, 11) ein elektrisch gesteuertes, in die zugehörige, am Druckluftvorratsbehälter (14) angeschlossene Druckluftversorgungsleitung (22, 23, 24, 25) eingeschaltetes Niveauregelventil (26, 27, 28, 29) und zwischen den Niveauregelventilen (26, 27) einerseits sowie (28, 29) andererseits je eine das Umpumpen bzw. Rückleiten der Druckluft zwischen den links- und rechtsseitigen Luftfedern (8,10 bzw. 9, 11) je Achse (1, 4) ermöglichende Umpumpleitung (34, 35) sowie eine elektrohydraulische Einrichtung (42, 44, 46 bzw. 43, 45, 47), mit der die wirksame Länge der den Luftfedern (8, 9, 10, 11) beigeordneten Stoßdämpfer (38, 39,40,41) entsprechend veränderbar ist, vorgesehen ist.

4. Omnibus nach Anspruch 1, dadurch gekennzeichnet, daß als Hilfsmittel für die Wagenaufbau-Verschwenkung je Luftfeder (8, 9, 10, 11) ein elektrisch gesteuertes, in die zugehörige, am Druckluftvorratsbehälter (14) angeschlossene Druckluftversorgungsleitung (22, 23, 24, 25) eingeschaltetes Niveauregelventil (26, 27, 28, 29) und zwischen den Niveauregelventilen (26, 27) einerseits sowie (28, 29) andererseits je eine das Umpumpen bzw. Rückleiten der Druckluft zwischen den links- und rechtsseitigen Luftfedern (8,10 bzw. 9, 11) je Achse (1,4) ermöglichende Umpumpleitung (34, 35) sowie ein elektromechanischer oder elektrohydraulischer Liftmechanismus (64 bzw. 65), mit dem der Abstand zwischen dem Wagenaufbau (7) und den Achsen (1, 4) im Bereich der betreffenden Luftfedern (8, 10) veränderbar ist, vorgesehen ist.

5. Omnibus nach Anspruch 3, dadurch gekennzeichnet, daß die elektrohydraulische Einrichtung je Achse (1 bzw. 4) eine durch ein elektrisch steuerbares Richtungsumschalt-/Absperrventil (44 bzw. 45) absperr- bzw. durchschaltbare und zwischen den hydraulischen Druckräumen der den links- und rechtsseitigen Luftfedern (8, 10 bzw. 9, 11) je Achse (1 bzw. 4) beigeordneten Stoßdämpfer (38, 39, 40, 41) verlaufende Verbindungsleitung (42 bzw. 43) mit eingebauter elektromotorisch betriebener reversibler Pumpe (46 bzw. 47) aufweist.

6. Omnibus nach Anspruch 4, dadurch gekennzeichnet, daß je Achse (1, 4) wenigstens ein benachbart einer Luftfeder (8,10) angeordneter elektromechanischer Liftmechanismus (64, 65) vorgesehen ist, der aus einer an der Achse (1, 4) oder dem Wagenaufbau (7) angelenkten Zahnstange (48) und einem auf letztere einwirkenden elektrischen Getriebemotor (49) mit Freilauf besteht, welcher Getriebemotor (49) an einem gleichzeitig auch die Zahnstange (48) führenden, am Wagenaufbau (7) bzw. der Achse (1, 4) dem Anlenkpunkt der Zahnstange (48) gegenüber angelenkten Tragorgan (50) angeordnet ist.

7. Omnibus nach Anspruch 4, dadurch gekennzeichnet, daß je Achse (1, 4) wenigstens ein benachbart einer Luftfeder (8, 10) angeordneter elektrohydraulischer Liftmechanismus (64, 65) vorgesehen ist, der aus einer einenendes am Wagenaufbau (7), anderenendes an der Achse bzw. Radaufhängung (1, 4) angelenkten Kolben-Zylinder-Einheit, deren an einer Kolbenstange (51) angeschlossener Kolben (52) im Zylinder (53) zwei Druckräume (54, 55) voneinander trennt, und einer elektromotorisch betriebenen, an beiden Druckräumen (54, 55) angeschlossenen reversiblen Pumpe (58) besteht.

8. Omnibus nach einem der Ansprüche 2 bis 4, dadurch gekennzeichnet, daß jedes der elektrisch, vorzugsweise durch von einer Regel- und Steuereinrichtung (18) ausgegebene Schaltbefehle gesteuerten Niveauregelventile (26, 27, 28, 29) drei Schaltstellungen hat, eine erste, in der die Luftfedern (8, 9, 10, 11) zur Einnivellierung des Wagenaufbaus (7) auf das gewünschte Höhenniveau gegenüber Fahrbahn aus einem Druckluftvorratsbehälter (14) über daran angeschlossene Druckluftversorgungsleitungen (22, 23, 24, 25) mit Druckluft befüllbar sind, eine zweite, in der die Luftfedern (8, 9, 10, 11) zur Einnivellierung des Wagenaufbaus (7) auf ein gegenüber vorherigem niedrigeres Höhenniveau in Bezug auf die Fahrbahn durch Ablassen von Druckluft in die Atmosphäre entlastbar sind, und eine dritte, in der die Druckluftversorgungsleitungen (22, 23, 24, 25) sowie die Entlastungsausgänge (30, 31, 32, 33) abgesperrt, aber die zwischen den Luftfedern (8, 9) einerseits und (10, 11) andererseits verlegten Umpumpleitungen (34, 35) auf Durchlaß geschaltet sind.

9. Omnibus nach einem der vorhergehenden Ansprüche, dadurch gekennzeichnet, daß im Druckluftsystem eine Reihe von Druckmeßsensoren (59, 60, 61, 62, 63) vorgesehen sind, die die Istwerte der Drücke im Druckluftvorratsbehälter (14) und den Luftfedern (8, 9, 10, 11) erfassen und an die Regel- und Steuereinrichtung (18) melden, welch letztere die übermittelten Druck-Istwerte mit vorgegebenen Sollwerten vergleicht, hieraus die nötigen Maßnahmen errechnet sowie entsprechende Schalt- bzw. Steuerbefehle an die über zugehörige Steuerleitungen angeschlossenen Organe (12, 26, 27, 28, 29; 36, 37, 66, 67; 44, 45, 46, 47; 64; 65; 49; 58) ausgibt.

## Claims

1. An omnibus, in particular with a low floor, with a vehicle body (7) supported on the axles (1, 4) or wheel suspensions via air springs (8, 9, 10, 11), and with a kneeling device formed in such a manner with regard to its parts and function that,
- during a bus stopping phase, the vehicle body (7) can be pivoted via an axially closed compressed-air system substantially about the longitudinal central axis (15) of its base, i.e. can be lowered on the side (16) having the passenger entrance doors to an entrance height lower than the normal level and can be raised simultaneously on the opposite side (17), by drawing compressed air out of the air springs (8, 10) on the entrance side and simultaneously supplying compressed air into the respective axially opposite air springs (9, 11), this process being controlled via auxiliary means, and
- at the end of the bus stopping phase, can be pivoted back into the normal position by drawing compressed air back into the air springs (8, 10) on the entrance side and simultaneously drawing compressed air out of the opposite air springs (9, 11),
characterised in that the kneeling device has special auxiliary control means with which, during the bus stopping phase, compressed air can be pumped out of the air springs (8, 10) on the entrance side over into the axially opposite air springs (9, 11) in order to lower the vehicle body (7) on the entrance side and, at the end of the bus stopping phase, compressed air can be drawn out of the air springs (9, 11) back into the air springs (8, 10) on the entrance side in order to pivot the vehicle body (7) back into the normal position.

2. An omnibus according to Claim 1, characterised in that, as auxiliary means for the pivoting of the vehicle body, an electrically controlled level regulating valve (26, 27, 28, 29), which is inserted in the associated compressed-air supply line (22, 23, 24, 25) connected to the compressed-air reservoir (14), is provided for each air spring (8, 9, 10, 11), and a pump line (34, 35) with an electromotively driven reversible pump (66, 67) is provided between the level regulating valves (26, 27) on the one hand and (28, 29) on the other, the pump line (34, 35) allowing the compressed air to be pumped over and drawn back between the left-hand and right-hand air springs (8, 10 and 9, 11) on each axle (1, 4) and being openable and closable by means of a control valve (36, 37).

3. An omnibus according to Claim 1, characterised in that, as auxiliary means for the pivoting of the vehicle body, an electrically controlled level regulating valve (26, 27, 28, 29), which is inserted in the associated compressed-air supply line (22, 23, 24, 25) connected to the compressed-air reservoir (14), is provided for each air spring (8, 9, 10, 11), and a pump line (34, 35), which allows the compressed air to be pumped over and drawn back between the left-hand and right-hand air springs (8, 10 and 9, 11) on each axle (1, 4), is provided between the level regulating valves (26, 27) on the one hand and (28, 29) on the other, and an electrohydraulic device (42, 44, 46 and 43, 45, 47) is provided for varying the effective length of the shock absorbers (38, 39, 40, 41) assigned to the air springs (8, 9, 10, 11) accordingly.

4. An omnibus according to Claim 1, characterised in that, as auxiliary means for the pivoting of the vehicle body, an electrically controlled level regulating valve (26, 27, 28, 29), which is inserted in the associated compressed-air supply line (22, 23, 24, 25) connected to the compressed-air reservoir (14), is provided for each air spring (8, 9, 10, 11), and a pump line (34, 35), which allows the compressed air to be pumped over and drawn back between the left-hand and right-hand air springs (8, 10 and 9, 11) on each axle (1, 4), is provided between the level regulating valves (26, 27) on the one hand and (28, 29) on the other, and an electromechanical or electrohydraulic lifting mechanism (64, 65) is provided for varying the distance between the vehicle body (7) and the axles (1, 4) in the region of the relevant air springs (8, 10).

5. An omnibus according to Claim 3, characterised in that the electrohydraulic device on each axle (1, 4) has a connection line (42, 43) with an in-built electromotively driven reversible pump (46, 47), which connection line (42, 43) can be closed and opened by an electrically controllable direction-reversing/shut-off valve (44, 45) and extends between the hydraulic pressure spaces of the shock absorbers (38, 39, 40, 41) assigned to the left-hand and right-hand air springs (8, 10 and 9, 11) on each axle (1, 4).

6. An omnibus according to Claim 4, characterised in that each axle (1, 4) is provided with at least one electromechanical lifting mechanism (64, 65), which is arranged adjacent to an air spring (8, 10) and comprises a toothed rack (48) hinged to the axle (1, 4) or the vehicle body (7) and an electric freewheeling geared motor (49) acting upon the toothed rack (48), this geared motor (49) being arranged on a supporting member (50) which at the same time also guides the toothed rack (48) and is hinged to the vehicle body (7) or the axle (1, 4) opposite the hinge point of the toothed rack (48).

7. An omnibus according to Claim 4, characterised in that each axle (1, 4) is provided with at least one electrohydraulic lifting mechanism (64, 65), which is arranged adjacent to an air spring (8, 10) and comprises a piston-cylinder unit hinged at one end to the vehicle body (7) and at the other end to the axle or wheel suspension (1, 4), the piston (52) of the piston-cylinder unit being connected to a piston rod (51) and separating two pressure spaces (54, 55) in the cylinder (53), and an electromotively driven reversible pump (58) connected to both pressure spaces (54, 55).

8. An omnibus according to any one of Claims 2 to 4, characterised in that each of the level regulating valves (26, 27, 28, 29), which are controlled electrically, preferably by switching commands issued by a regulating and controlling device (18), has three switching positions, a first position in which the air springs (8, 9, 10, 11) can be filled with compressed air from a compressed-air reservoir (14) via compressed-air supply lines (22, 23, 24, 25) connected thereto in order to adjust the vehicle body (7) to the desired vertical level relative to the roadway, a second position in which the air springs (8, 9, 10, 11) can be discharged by evacuating compressed air into the atmosphere in order to adjust the vehicle body (7) to a vertical level relative to the roadway which is lower than the previous level, and a third position in which the compressed-air supply lines (22, 23, 24, 25) and the discharging outlets (30, 31, 32, 33) are closed, but the pump lines (34, 35) installed between the air springs (8, 9) on the one hand and (10, 11) on the other are switched so as to permit passage.

9. An omnibus according to any one of the preceding claims, characterised in that a series of pressure-measuring sensors (59, 60, 61, 62, 63) are provided in the compressed-air system, which detect the actual values of the pressures in the compressed-air reservoir (14) and the air springs (8, 9, 10, 11) and signal them to the regulating and controlling device (18), which compares the transmitted actual pressure values with predetermined nominal values, calculates the necessary measures therefrom and issues corresponding switching and control commands to the members (12, 26, 27, 28, 29; 36, 37, 66, 67; 44, 45, 46, 47; 64; 65; 49; 58) connected via associated control lines.

## Revendications

1. Autobus, en particulier à plate-forme surbaissée, comportant une carrosserie (7) s'appuyant par des ressorts à air (8, 9, 10, 11) sur les essieux (1, 4) ou suspension de roues et comportant un dispositif d'inclinaison dont la structure et la fonction sont tels que, par l'intermédiaire d'un système d'air comprimé fermé pour chaque essieu
- la carrosserie (7) s'incline sensiblement autour de son axe médian du plancher longitudinal (15) pendant la phase d'arrêt du bus, c'est-à-dire abaissable à une hauteur d'embarquement plus basse que le niveau normal du côté de l'embarquement (16) et en même temps relevable du côté opposé (17) par évacuation commandée par des moyens auxiliaires de l'air comprimé des ressorts à air (8, 10) du côté de l'embarquement et renvoie simultanément de l'air comprimé dans les ressorts (9, 11) opposés sur chacun des essieux ; et,
- la carrosserie (7) bascule en retour, en position normale à la fin de la phase d'arrêt par le renvoi de l'air sous pression dans les ressorts à air (8, 10) situés du côté d'embarquement tout en évacuant l'air sous pression des ressorts à air situés de l'autre côté (9, 11),
caractérisé en ce que le dispositif d'inclinaison présente des moyens auxiliaires particuliers pour l'abaissememt de la carrosserie du côté d'embarquement permettant pendant la phase d'arrêt du bus, de commander un pompage de transfert de l'air comprimé des ressorts à air (8, 10) situés du côté de l'embarquement aux ressorts à air (9, 11) situés de l'autre côté de l'essieu et après la fin de la phase d'arrêt du bus, de renvoyer de l'air sous pression des ressorts (9, 11) dans les ressorts (8, 10) pour basculer en retour la carrosserie (7) en position normale.

2. Autobus selon la revendication 1, caractérisé en ce que le moyen auxiliaire pour le basculement de la carrosserie est, pour chaque ressort à air (8, 9, 10, 11), une soupape de régulation de niveau (26, 27, 28, 29) commandée électriquement et reliée à la conduite d'approvisionnement en air sous pression (22, 23, 24, 25) correspondante reliée au réservoir à air sous pression et entre les soupapes de régulation de niveau d'une part, (26, 27) et d'autre part (28, 29), on prévoit, permettant pour chacune le pompage de transfert/le retour de l'air sous pression entre les ressorts du côté gauche et les ressorts du côté droit (8, 10, 9, 11) de chaque axe (1, 4), une conduite de pompage de transfert (34, 35) ouverte/fermée au moyen d'une soupape de commutation (36, 37) avec une pompe réversible (66, 67) entraînée par un moteur électrique.

3. Autobus selon la revendication 1, caractérisé en ce que le moyen d'assistance pour l'inclinaison de la carrosserie pour chaque ressort à air (8, 9, 10, 11) comporte une soupape de régulation de niveau (26, 27, 29) commandée électriquement et reliée à une conduite d'alimentation d'air sous pression correspondante (26, 27, 28, 29) reliée au réservoir d'air sous pression (14) et entre les soupapes de régulation de niveau (26, 27), d'une part et (28, 29), d'autre part, liées à chacune des conduites de transfert (34, 35) permettant le pompage de transfert, respectivement le retour de l'air sous pression entre les ressorts à air des côtés gauche et droit (8, 10 respectivement 9, 11) de chacun des axes (1, 4) ainsi qu'une installation électrohydraulique (42, 44, 46 respectivement 43, 45, 47) avec laquelle on modifie la longueur efficace des amortisseurs (38, 39, 40, 41) associés aux ressorts à air (8, 9, 10, 11).

4. Autobus selon la revendication 1, caractérisé en ce que les moyens d'assistance pour l'inclinaison de la carrosserie de chaque ressort à air (8, 9, 10, 11) comportent une soupape de régulation de niveau (26, 27, 28, 29) commandée électriquement et reliée à la conduite d'alimentation d'air sous pression correspondante (26, 27, 28, 29) et reliée au réservoir d'air sous pression (14) et entre les soupapes de régulation de niveau (26, 27), d'une part et (28, 29) d'autre part, il y a chacune des conduites de transfert (34, 35) permettant le pompage de transfert, ainsi qu'un mécanisme de levage électromécanique ou électrohydraulique (64, 65) permettant de modifier l'intervalle entre la carrossorie (7) du véhicule et les axes (1, 4) dans la zone des ressorts (8, 10) concernés.

5. Autobus selon la revendication 3, caractérisé en ce que le dispositif électrohydraulique de chaque axe (1, 4) présente une conduite de liaison (42, 43) fermée/ouverte par une soupape (44, 45) d'arrêt ou de changement de direction commandée électriquement reliant les chambres de pression hydraulique des amortisseurs (38, 39, 40, 41) associés aux ressorts à air des côtés gauche et droit (8, 10, 9, 11) de chaque axe (1, 4) avec une pompo réversible (46, 47) entraînée par un moteur électrique.

6. Autobus selon la revendication 4, caractérisé en ce que chaque axe (1, 4) comporte au moins un mécanisme de levage électromécanique (64, 65) situé dans le voisinage d'un ressort à air (8, 10), mécanisme constitué par une crémaillère (48) articulée à l'axe (1, 4) ou à la carrosserie (7) et d'un motoréducteur (49) électrique à roue libre coopérant avec celle-ci, le motoréducteur (49) étant situé sur un organe de support guidant en même temps la crémaillère (48) reliée par articulation à la carrosserie (7) respectivement à l'axe (1, 4) de l'autre côté du point d'articulation de la crémaillère.

7. Autobus selon la revendication 4, caractérisé en ce que chaque axe (1, 4) comporte au moins un mécanisme de levage électromagnétique (64, 65) situé dans le voisinage d'un ressort à air (8, 10) constitué par une unité piston-cylindre réliée à une de ses extrémités à la carrosserie, à l'autre extrémité de l'axe, respectivement au support des roues, (1, 4) dont le piston (52) relié à une tige de piston (51) sépare deux chambres de pression (54, 55) dans le cylindre (53) d'une pompe réversible (58) et d'un moteur électrique relié aux deux chambres de pression (54, 55).

8. Autobus selon l'une des revendications 1 à 4, caractérisé en ce que chacune des soupapes de régulation de niveau (26, 27, 28, 29), électriques, de préférence commandées par des ordres de commutation délivrés par un dispositif de commande et de régulation (18) possède trois positions de commutation, une première dans laquelle les ressorts à air (8, 9, 10, 11) peuvent être remplis par de l'air sous pression à partir d'un réservoir d'air sous pression (14) par des conduites d'approvisionnement en air sous pression (22, 23, 24, 25) reliées à celui-ci pour la mise à niveau de la carrosserie au niveau souhaité par rapport à la chaussée, une seconde dans laquelle les ressorts à air (8, 9, 10, 11) destinés à la mise à niveau de la carrosserie (7) à un niveau plus bas que le précédent par rapport à la chaussée sont délestables par le rejet de l'air sous pression dans l'atmosphère et une troisième dans laquelle les canalisations d'approvisionnement en air sous pression (22, 23, 24, 25) ainsi que les sorties de délestement (30, 31, 32, 33) sont fermées mais les conduites de transfert (34, 35) situées entre les ressorts à air (8, 9) d'une part et (10, 11) d'autre part, sont ouvertes.

9. Autobus selon l'une des revendications précédentes, caractérisé en ce que l'on prévoit une série de palpeurs de mesure de pression (59, 60, 61, 62, 63) dans un système d'air sous pression, qui détermine la valeur réelle de la pression dans le réservoir d'air sous pression (14) et les ressorts à air (8, 9, 10, 11) et les communique au dispositif de régulation et de commande, ce dispositif compare des valeurs de pression réelles à des valeurs de consigne prédéterminées, et on déduit les mesures à prendre de même que les ordres de commutation nécessaires pour les organes (12, 26, 27, 28, 29, 36, 37, 66, 67, 44, 45, 46, 47, 64, 65, 49, 58) reliés par les conduites de commande correspondantes.
